# EUROPEAN PATENT APPLICATION

(11) **EP 3 763 203 A1**
(43) Date of publication of application: **13.01.2021**
(21) Application number: 19763398.5
(22) Date of filing: 26.02.2019
(51) Int. Cl.: A01K 1/015

(54) **SANITARY GRANULAR MATERIAL FOR ABSORBING LIQUIDS, ODORS AND MOISTURE FROM SOLID WASTE, RELATED PRODUCTION METHOD AND RELATED USE**

(30) Priority: 07.03.2018 BR 102018004568
(71) Applicant: SL Brands Comércio, Exportação e Importação Ltda., 04536-000 São Paulo - SP (BR)
(72) Inventor: JUNQUEIRA PAMPLONA SKAF, André, 05657-230 São Paulo - SP (BR)
(74) Representative: Tiburzi, Andrea
(86) International application number: PCT/BR2019/050057
(87) International publication number: WO 2019/169461

(57) **Abstract**

This invention concerns a granule, with a high capacity for absorption which can be used to absorb liquids and moisture from solid waste, obtained through the processing of natural raw materials, such as: cassava mass and sugar cane bagasse. It has an optimum yield, and a high capacity for absorption and for neutralizing odors; the residues are retained in solid agglomerates which are easy to handle. It is non-toxic, made from renewable materials, and non-prejudicial to the health of animals or those who handle it. It is practical, hygienic and easy to handle. The granule obtained can be used as a "hygienic granule" for use with domestic animals. A process for producing the granule is also described.

## Description

### FIELD OF THE INVENTION

The present invention concerns a granule which can be used as a "hygienic granule for cats" given its high power to absorb liquids and/or moisture from solid waste. A process is also described for the production of the cited granule, obtained by processing vegetable fibers, and cassava mass (residue from industrial processing) associated with sugar cane bagasse with the addition of water.

### DESCRIPTION OF THE STATE OF PRIOR ART

Animal owners, who use hygienic granules, seek to obtain products that are easy to handle, light, practical, neutralizing of odors, which form lumps that do not dissolve, are long-lasting, do not generate dust on being handled and which are sustainable. Said hygienic granule must perform the function of absorbing liquids and moisture from solid waste in addition to neutralizing odors and fully meeting the aforementioned demands.

There is a wide variety of such products on the market: made from mineral granules (clay, bentonite, sepiolite, silica), wood and processed cereals. However, these materials present some disadvantages, including the following: clay granules generate a lot of dust, have low efficiency in the neutralization of odors, and possess high density (they are very heavy); processed cereal granules have low durability and form lumps which dissolve easily, in addition to the fact that their raw material can be used as human food; and silica granulates do not agglutinate, resulting in significant waste due to the need change the entire contents of the litter tray at short intervals of time (7-10 days).

Additionally, in all the above examples, in addition to the fact that the raw materials are not renewable, inhaling the dust or accidentally ingesting these granules can be very harmful to the animal's health.

As such a need remains to provide a product which neutralizes odors, does not generate dust, is light, forms solid clumps which do not dissolve, comes from renewable sources and whose raw material is not a source of human food.

Bearing in mind the technical problems described by consumers, an ideal composition has been developed which consists of a mixture of cassava mass (a byproduct of the food industry), sugar cane bagasse, minerals and water. The granule obtained is capable of meeting the needs of consumers regarding hygiene, practicality, neutralization of odors, lightness, firmness of clumps and sustainability.

Additionally, because it uses, in its simple composition of basically two residues from agroindustry which cannot be used for human food, sugar cane bagasse and cassava mass, the granule hereby described has a positive environmental impact in relation to those on the market today. Moreover, as it uses 100% renewable raw materials, this product is the only one which fulfils the two requirements of: (i) not using a source of human food; and (ii) having as its basis 100% renewable ingredients.

### OBJECTIVES OF THE INVENTION

A first objective is to provide a granule from renewable raw materials with a high capacity to absorb liquids, which is non-toxic and neutralizing of odors, and which can be used as a hygienic granule for domestic animals, especially cats.

A second objective is to describe a production process for the cited granule.

A third objective is to describe the use of the product as a hygienic granule, particularly for cats.

### BRIEF DESCRIPTION OF THE INVENTION

The first objective is achieved by a granule for the absorption of liquids and moisture from solid waste, comprising fibrous bran, vegetable fibers (sugar cane bagasse), water and minerals.

The second objective is achieved by the process of the preparation of the granule for the absorption of liquids and moisture from solid waste, comprising the following steps:
a) obtaining the source of fibrous bran;
b) obtaining and processing the sugar cane bagasse through pelletization and drying;
c) preparing the mixture of the source of fibrous bran, sugar cane bagasse and water;
d) extruding the mixture obtained in (c);
e) cooling the extruded product of (d);
f) grinding the granules obtained in stage (e);
g) sieving and classifying the grains ground in (f);
h) optionally, adding natural fragrances; and
i) packaging the product obtained in (h).

The third objective is obtained by the use of a granule as a hygienic granule for domestic animals.

### SUMMARIZED DESCRIPTION OF THE FIGURES

Figure 1 - Illustration of the granule of the present invention agglomerated following simulation of a urine dose.

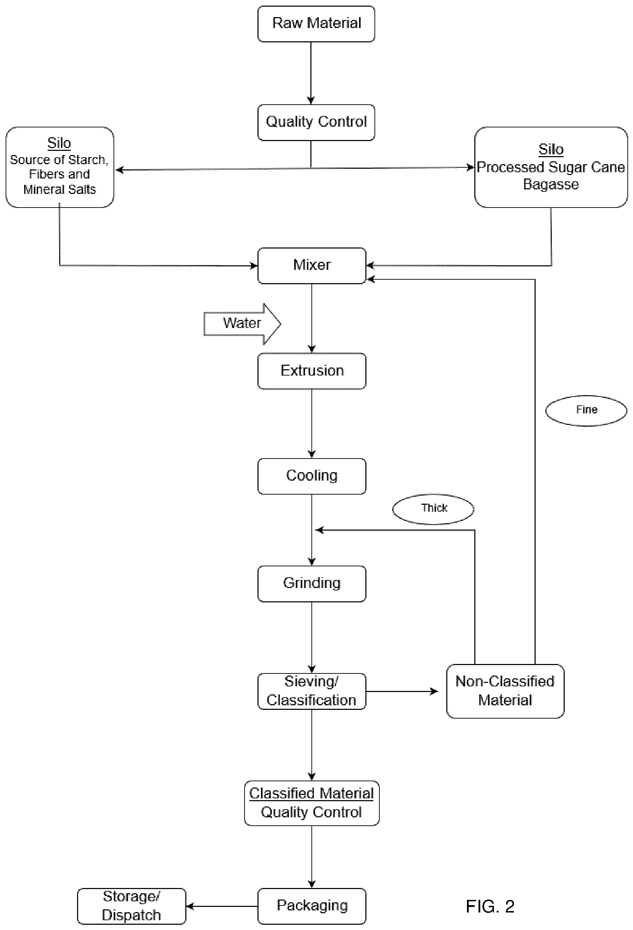

Figure 2 - Complete Flowchart of the Production Process of the Hygienic Granule.

### DETAILED DESCRIPTION OF THE INVENTION

In one mode, the granule comprises, as a percentage of weight in relation to the total weight of the granule:
- 60-94% fibrous bran;
- 3-28% sugar cane bagasse;
- Up to 17% water; and
- Less than 10% minerals.

In a preferred mode, the fibrous bran is starch obtained from cassava mass, more specifically, the dry solid residue from the processing of cassava.

The processing of the cassava is realized by the food industries which perform it, following washing and peeling, and the raw material is thus obtained which is used, for example, for the production of tapioca flour and starch (products for human food). As a result of this processing, a liquid is obtained with a low level of starch, that is undesirable for the food industry. This byproduct with a low level of starch undergoes a drying process, resulting in the residue used as a raw material of the hygienic granule hereby described.

Said dry solid residue resulting from the processing of the cassava is traditionally used in the preparation of feedstuffs and as "mining flour", but an unused surplus nevertheless exists on the market, which needs to be disposed of. The granule hereby described is able to absorb some of this surplus residue and, thus, reduce this environmental problem.

In one mode, said dry solid residue from the processing of cassava contains 6% to 10% fiber.

Generally speaking, the minerals found in the present granule are derived from the processing of cassava. The percentages of these may vary depending on the characteristics of the soil, the fertilizers used and the climate where the cassava was planted. However, these indices are generally not found above a total of 10% by weight of the total weight of the granule.

In a preferred mode, the minerals present in the composition of the granule are selected from among, and without being limited to, calcium, magnesium, potassium, iron, phosphorous and a mixture thereof.

Moreover, ashes and fats may be added to the formulation as additional components.

In a preferred mode, the ashes and fats are added in concentrations of:
- Up to 2% ashes; and
- Up to 3.5% fats.

In a preferred mode, the grains of the granule possess a size of between 0.20 and 4.00mm.

The density of the granule is that which results in the best ratio of weight of the product to the volume absorbed, where there is no formation of dust and the agglomerate is the most superficial possible.

In a preferred mode, the density of the granule is from 200 to 350 g/l (0.20 to 0.35 g/ml).

The granule hereby described possesses some native characteristics deriving from its composition, namely:
- High yield due its high capacity for absorption;
- Retention of odor, following contact with the product;
- High capacity to agglomerate the liquids absorbed; and
- Non-toxic, so it does not present dangers to health if ingested.
- Non-addition of chemical products
- Lightness of the product
- Emission of 0.01% of dust

Given the characteristics obtained, the product hereby described can be used as a "hygienic granule" for use with domestic animals.

Moreover, said granule is not harmful to the health of animals, or of the people who handle it, since it does not contain toxic ingredients. It is also practical and hygienic, since it does not generate dust. Furthermore, the granule possesses the characteristic of forming firm agglomerates (clumping) and being easy to handle, having its granulometry established in such a manner as not to contain dust and to have an optimum yield. Only 1.3kg is sufficient for approximately 30 days for an adult cat of 4kg, unlike the cereal-based products which possess packages of 3kg for the same period of time, and the clay products which require, on average, 4kg for 30 days.

The process for obtaining the granule comprises the following stages:
a) obtaining the source of fibrous bran;
b) obtaining and processing the sugar cane bagasse through pelletization and drying;
c) preparing the mixture of the bran fiber source, sugar cane bagasse and water;
d) extruding the mixture obtained in (c);
e) cooling the extruded product of (d);
f) grinding the granules obtained in stage (e);
g) sieving and classifying the grains ground in (f);
h) optionally, adding natural fragrances; and
i) packaging the product obtained in (h).

In a preferred mode, the fibrous bran is starch obtained from cassava mass, but more precisely, the dry solid residue from the processing of the cassava.

The processing of the cassava is realized by the food industries which perform it, following washing and peeling, and the raw material is thus obtained which is used, for example, for the production of tapioca flour and starch (products for human food). As a result of this processing, a liquid is obtained with a low level of starch, that is undesirable for the food industry. This byproduct with a low level of starch undergoes a drying process, resulting in the residue used as a raw material of the hygienic granule hereby described.

Said dry solid residue resulting from the processing of the cassava is traditionally used in the preparation of feedstuffs and as "mining flour", but nevertheless an unused surplus exists on the market, which needs to be disposed of. The granule hereby described is able to absorb some of the surplus of this residue and, thus, reduce this environmental problem.

In one mode, said dry solid residue from the processing of cassava contains 6% to 10% fiber.

In a preferred mode, the grains of the granule possess a size of between 0.20 and 4.00mm.

The density of the granule is that which results in the best ratio of weight of the product to the volume absorbed, where there is no formation of dust and the agglomerate is the most superficial possible.

In a preferred mode, the density of the granule is from 200 to 350 g/l (0.20 to 0.35 g/ml).

In one mode, the extrusion process begins at a temperature of from 130 °C.

In one mode, the operational time of the extrusion process is up to 2 minutes.

Unlike in a conventional extrusion process, the product obtained is not subjected to drying by a heat source (a boiler, for example), but is sent directly to a cooling stage controlled at ambient temperature, where partial drying is obtained through flashing, deriving from the sharp variation in temperature

(from 160 to 200 °C to ambient temperature). The residual moisture is controlled at the maximum value of 17%, and it plays an important part in the activation of the "clumping" (agglomerate) effect of the product.

Note that, in dispensing with the conventional drying applied, as a rule, to all extruded products, and the consequent burning of some form of fuel, the process hereby described adds another important environmental advantage.

In a preferred mode, the grinding occurs due to the need to expose the porous cavities of the inside of the granules deriving from the extrusion, so that there is better absorption of the liquid.

The effect of "aerating" the product obtained by the extrusion in this case, is that it produces the cavities where the liquid waste is deposited. At the same time, when this liquid is released and the moisture exceeds its control value, it activates the starch gelatinized by the extrusion, causing the desired agglomeration.

In an optional mode, natural fragrances can be added to the granule in order to confer an agreeable odor thereon. Said fragrances may be selected from, without being limited to, lemongrass and/or coconut scent, or any other suitable for application to the cited granule.

In fact, and unlike what the majority of existing products seek to do, what occurs is not a simple process of absorption, but of an effective "encapsulation" of the odor of the urine and solid waste. Another major difference lies in the quantity of product necessary for the liquid treated, which for the present granule is between 2 and 3 times less by weight than the products currently on the market. This enables, for example, a 1.3kg package to meet the needs of 1 cat for up to 30 days.

### TESTS

### Formulations of the tested products

- Granule of the Present Invention = product based on cassava mass and sugar cane bagasse
- World's Best Cat Litter = corn-based product
- Tidy Cats = mineral-based product - bentonite

Tests were performed in a laboratory with the granule of the present invention which evaluated the absorption, agglomeration time, agglomeration, mass by volume, analysis of the semi-volatile and volatile substances, percentage of dust and fiber microscopy, for better characterization of the product. These tests were realized by SGS Integrated Paper Services Inc.

For prompt reference, the granule of the present invention used in the tests possesses the following composition:
- 87% fibrous cassava bran;
- 3% sugar cane bagasse; and
- 10% water.

### 1. Absorption test

The granule of the present invention was prepared for 24 hours at 50 ± 2% relative humidity and at 73±°C. The granule was soaked a solution of 0.9% sodium chloride at ambient temperature for 15 minutes, and then drained for a minute over a sieve of 0.60 mm. The mass of the granule was then weighed. The quantity of solution absorbed was calculated together with the absorption per gram. The average in grams of sodium chloride absorbed per gram of the granule of the present invention was 8.04 grams. The results obtained are shown in Table 1 below.

**Table 1 - Absorption: Granule of the present invention**

| **Replicat e** | **Weight of dry sample (g)** | **Immers ion time (min)** | **Drainage time (min)** | **Weight of wet sample (g)** | **Grams absorbed** | **Grams absorbed per gram of the product** |
|---|---|---|---|---|---|---|
| 1 | 10.45 | 15 | 1 | 95.06 | 84.61 | 8.10 |
| 2 | 10.85 | 15 | 1 | 95.62 | 84.77 | 7.81 |
| 3 | 10.10 | 15 | 1 | 92.81 | 82.71 | 8.19 |
| 4 | 10.50 | 15 | 1 | 96.41 | 85.91 | 8.18 |
| 5 | 10.80 | 15 | 1 | 96.40 | 85.60 | 7.93 |
| | | | | | | |
| | | | | Average | 84.72 | 8.04 |

### 2. Agglomeration Time Test

A solution of 30 milliliters of sodium chloride at 0.9% in water was used to simulate a single dose of cat urine. This solution was poured into a recipient of the granule of the present invention which possessed a granule layer of 70mm in depth. After 10 minutes, the agglomerate formed was able to be removed from the recipient without fragmenting. This was repeated in the 5 samples tested.

### 3. Test of the Agglomeration (Tight Clumping)

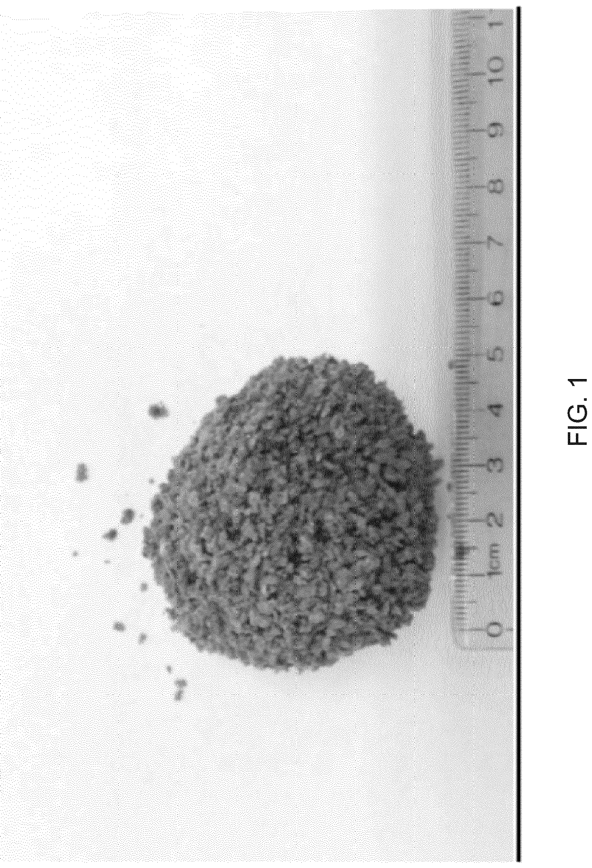

A solution of 30 milliliters of sodium chloride at 0.9% in water was used to simulate a single dose of cat urine. This solution was poured into a recipient of the granule of the present invention which possessed a granule layer of 70mm in depth. After 1 hour, the agglomerate formed was measured at approximately 50mm by 50mm (Figure 1). The agglomerate could be removed and handled without breaking.

### 4. Mass per Volume Test

The mass per volume of four products was determined by weighing 0.25 liters of the product. Five replicates per sample were made. The granule of the present invention was the lightest per volume tested. The results obtained are shown in Tables 2 to 5 below.

**Table 2 - Mass per Unit Volume (grams of product / ml on forming the clump) Hygienic Granule - Tidy Cats Clay**

| **Sample Identification** | **Replicate** | **Sample volume (ml)** | **Sample weight (g)** | **Grams per milliliter** |
|---|---|---|---|---|
| 00193-18-001 | 1 | 250 | 188.78 | 0.76 |
| | 2 | 250 | 191.00 | 0.76 |
| | 3 | 250 | 190.17 | 0.76 |
| | 4 | 250 | 193.13 | 0.77 |
| | 5 | 250 | 192.98 | 0.77 |
| | | | | |
| | | | Average | 0.76 |
| | | | Standard Deviation | 0.01 |

**Table 3 - Mass per Unit Volume (grams of product / ml on forming the clump) Hygienic Granule - Tidy Cats Lightweight**

| **Sample Identification** | **Replicate** | **Sample volume (ml)** | **Sample weight (g)** | **Grams per milliliter** |
|---|---|---|---|---|
| 00193-18-002 | 1 | 250 | 99.70 | 0.40 |
| | 2 | 250 | 97.37 | 0.39 |
| | 3 | 250 | 102.53 | 0.41 |
| | 4 | 250 | 102.51 | 0.41 |
| | 5 | 250 | 100.97 | 0.40 |
| | | | | |
| | | | Average | 0.40 |
| | | | Standard Deviation | 0.01 |

**Table 4 - Mass per Unit Volume (grams of product / ml on forming the clump) Hygienic Granule - World's Best Cat Litter**

| **Sample Identification** | **Replicate** | **Sample volume (ml)** | **Sample weight (g)** | **Grams per milliliter** |
|---|---|---|---|---|
| 00193-18-003 | 1 | 250 | 140.82 | 0.56 |
| | 2 | 250 | 142.47 | 0.57 |
| | 3 | 250 | 146.08 | 0.58 |
| | 4 | 250 | 146.30 | 0.59 |
| | 5 | 250 | 139.14 | 0.56 |
| | | | | |
| | | | Average | 0.57 |
| | | | Standard Deviation | 0.01 |

**Table 5 Mass per Unit Volume (grams of product / ml on forming the clump) Hygienic Granule - Granule of the present invention**

| **Sample Identification** | **Replicate** | **Sample volume (ml)** | **Sample weight (g)** | **Grams per milliliter** |
|---|---|---|---|---|
| 00193-18-004 | 1 | 250 | 70.57 | 0.28 |
| | 2 | 250 | 74.45 | 0.30 |
| | 3 | 250 | 72.06 | 0.29 |
| | 4 | 250 | 72.76 | 0.29 |
| | 5 | 250 | 74.01 | 0.30 |
| | | | | |
| | | | Average | 0.29 |
| | | | Standard Deviation | 0.01 |

### 5. Semi-volatile analysis by Gas Chromatography with Mass Spectrometry (GC/MS)

Around 0.5 grams of the sample was weighed and placed in a 20ml flask. Five milliliters of methylene chloride were added to cover the sample. The blank and unknown samples were agitated for 2 minutes and placed in an ultrasonic bath for 20 minutes. Following the sonication, an aliquot of 1 ml was fortified with 10µL of internal standard solution 4000µg/mL. No semi-volatile compound was detected in the samples. The analysis conditions of the GC-MS are shown in Table 6. The compounds detected are shown in Table 7.

**Table 6 - Analytical Conditions for GC/MS Analysis**

| | |
|---|---|
| Injected Volume | 1.0µL CTC PAL Autosampler |
| Column | Zebron ZB-SV (30m X 0.25mm X 0.25µm) |
| Injection Mode | Split (10:1) |
| Input | 1.0 mL/min constant flow |
| Injector Temperature | 280 °C |
| Transference Line Temperature | 280 °C |
| Carrier Gas | Ultrapurified Helium |
| GC - Oven Conditions | 560°C for 3.0 min. 10 °C/min to 220 °C. for 0 min. 25°C/min to 325°C. for 7.50 min |
| MS Analysis Range | 35-500 amu |
| Solvent Delay | 5.0 minutes |

**Table 7 - Semi-volatile analysis by GC/MS**

| **Client Sample Identification** | **8270d/semi-volatile components detected** |
|---|---|
| Granule of the present invention | None |

### 6. Analysis of Volatiles by Static Headspace

Approximately 0.5 grams of the samples were weighed to the nearest 0.01 gram, placed in a 22ml headspace flask, and sealed. The blank and samples were fortified with 10µL Internal Standard and Surrogate Solution (IS/SS). The analysis conditions of the GC-MS are shown in Table 8. The compounds detected are shown in Table 9.

**Table 8 - Analytical Conditions for GC/MS Analysis**

| | |
|---|---|
| Incubation Temperature | 140°C |
| Incubation Time | 20 minutes |
| Syringe Temperature | 150°C |
| Injected Volume | 1000µL CTC PAL Static Headspace |
| Column | HP-VOC (30m X 0,20mm X 1.25µm) |
| Injection Mode | Split (10:1) |
| Input | 1.0 mL/min constant flow |
| Injector Temperature | 220 °C |
| Transference Line Temperature | 280 °C |
| Carrier Gas | Ultrapurified Helium |
| GC - Oven Conditions | 40°C for 3.0 min, 8°C/min to 110 °C, 20°C/min to 250 °C, for 0 min |
| MS Analysis Range | 35-300 amu |
| Solvent Delay | 1.50 minute |

**Table 9 - GC/MS Analysis Results: Volatiles/8260b**

| **Sample Identification** | **Component** | **Estimated Concentration (ppm)** |
|---|---|---|
| Granule of the present invention | Acetone | 1.03 |
| Granule of the present invention | Methyl acetate | 1.37 |

The estimated values were calculated by comparing them with areas and the standard concentrations with the peak areas of unknown compounds. A residual quantity of acetone and methyl acetate was found in the samples. These compounds are commonly used solvents.

### 7. Percentage of dust

The percentage of dust was calculated by placing a bag of cat litter in a vacuum-sealed system. The quantity of particles of dust collected in a vacuum filter was weighed and compared with the initial weight of the cat litter. The granule of the present invention was calculated as being 99.99% free of dust. The results obtained are shown Table 10 below.

**Table 10 - Percentage of Accumulated Dust - of the present invention**

| **Control** | |
|---|---|
| Weight of the Recipient (g) | 81.52 |
| Recipient with Dust (g) | 81.52 |
| Accumulated Dust (g) | 0.00 |
| | |

| **Mass of the granule of the present invention** | |
|---|---|
| Product of the granule of the present invention with bag (g) | 5990.0 |
| Weight of the bag (g) | 29.84 |
| Mass of the granule of the present invention (g) | 5960.16 |
| | |

| **Dust of the granule of the present invention** | |
|---|---|
| Weight of the Recipient (g) | 81.52 |
| Recipient with Dust (g) | 81.96 |
| Accumulated Dust (g) | 0.44 |
| Dust of the granule of the present invention (g) | 0.44 |
| | |
| Percentage of Accumulated Dust | |
| Percentage of Dust (%) | 0.01 |

Having described examples of preferred implementations, it must be understood that the scope of the present invention encompasses other possible variations, being limited only by the contents of the attached claims, with the possible equivalents being included therewith.

## Claims

1. Granule for the absorption of liquids, odors and moisture from solid waste, **characterized by** the fact that it comprises fibrous bran, sugar cane bagasse fibers, water and minerals.

2. Granule in accordance with claim 1, **characterized by** the fact that it comprises 60 to 94 % starch, 3 to 28% sugar cane bagasse fibers, up to 17% water and less than 10% minerals.

3. Granule in accordance with claim 1, **characterized by** the fact that the fibrous bran is starch derived from the dry solid residue of the processed cassava.

4. Granule in accordance with claim 3, **characterized by** the fact that the dry solid residue from the processed cassava contains 6% to 10% fiber.

5. Granule in accordance with claim 1, **characterized by** the fact that the minerals are selected from, without being limited to, calcium, magnesium, potassium, iron, phosphorous and a mixture thereof.

6. Granule in accordance with any of claims 1 to 5, **characterized by** the fact that it possesses a size of between 0.20 and 4.0mm.

7. Granule in accordance with any of claims 1 to 6, **characterized by** the fact that it possesses a density of between 200 and 350 g/l.

8. Process for preparing the granule for absorption of liquids, odors and moisture of solid waste, as defined in any of claims 1 to 7, **characterized by** the fact that it comprises the following stages:
a) obtaining the source of fibrous bran;
b) obtaining and processing the sugar cane bagasse through palletization and drying;
c) preparing the mixture of the source of fibrous bran, sugar cane bagasse and water;
d) extruding the mixture obtained in (c);
e) cooling the extruded product of (d);
f) grinding the granules obtained in stage (e);
g) sieving and classifying the grains ground in (f);
h) optionally, adding natural fragrances; and
i) packaging the product obtained in (h).

9. Process, in accordance with claim 8, **characterized by** the fact that the extrusion process begins at a temperature of from 130°C and possesses a duration of up to 2 minutes.

10. Process, in accordance with any of claims 8 or 9, **characterized by** the fact that the product of the extrusion is not submitted to drying by a heat source.

11. Process, in accordance with claim 10, **characterized by** the fact that partial drying by flashing occurs.

12. Use of a granule as defined in any of claims 1 to 7, **characterized by** the fact that is a hygienic granule for domestic animals.

13. Invention **characterized by** any of the forms of realization or claim categories, as a product, process or use encompassed by the subject matter initially revealed in the patent application.
